# EUROPEAN PATENT APPLICATION

(11) **EP 4 559 532 A1**
(43) Date of publication of application: **28.05.2025**
(21) Application number: 24214613.2
(22) Date of filing: 21.11.2024
(51) Int. Cl.: A62C 3/07, A62C 3/16

(54) **BATTERY PACK FIRE EXTINGUISHER FOR ELECTRIC VEHICLE AND EXTINGUISHING METHOD THEREOF**

(30) Priority: 27.11.2023 KR 20230166731
(71) Applicant: SAMSUNG SDI CO., LTD., Yongin-si, Gyeonggi-do 17084 (KR)
(72) Inventor: KIM, Jintaek, 17084 Yongin-si (KR)
(74) Representative: Marks & Clerk LLP

(57) **Abstract**

A battery pack fire extinguisher for an electric vehicle includes: a pack case in the electric vehicle and accommodating a plurality of battery modules; an extinguishing tube between adjacent ones of the battery modules in the pack case; an extinguishing agent cylinder selectively connected to the extinguishing tube and mounted in the electric vehicle and configured to supply an extinguishing agent; an extinguishing water connector selectively connected to the extinguishing tube and configured to supply external extinguishing water; and a one-way flow valve to prevent backflow of the extinguishing agent or extinguishing water when selectively connecting the extinguishing agent cylinder or the extinguishing water connector to the extinguishing tube, respectively.

## Description

### BACKGROUND

### 1. Field

Aspects of embodiments of the present disclosure relate to a battery pack fire extinguisher for an electric vehicle and an extinguishing method thereof.

### 2. Description of the Related Art

Current electric vehicles that are being sold and operated suffer from ignition due to an accident or a battery malfunction. To extinguish the ignition, a method in which a barrier is installed around the ignited vehicle and then filled with water to cool the battery and extinguish it is used.

With this method, however, an early extinguishing response is difficult before a fire truck arrives, and the battery extinguishing requires a lot of time and a large amount of water. Additionally, because the extinguishing water is sprayed from outside the electric vehicle, the extinguishing efficiency is also very low.

### SUMMARY

Embodiments of the present disclosure provide a battery pack fire extinguisher for an electric vehicle that suppresses ignition of the battery pack by spraying an extinguishing agent built into an extinguishing agent cylinder provided in the electric vehicle when an event (e.g., a thermal event) occurs. Additionally, embodiments of the present disclosure provide a battery pack fire extinguisher for an electric vehicle that suppresses the ignition of the battery pack through primary extinguishing and cooling with an extinguishing agent and then, additionally, cooling and extinguishing with external extinguishing water.

Embodiments of the present disclosure provide a battery pack fire extinguishing method for an electric vehicle that suppresses the ignition of the battery pack by spraying an extinguishing agent provided in the electric vehicle when an event occurs. In addition, embodiments of the present disclosure provide a battery pack fire extinguishing method for an electric vehicle that suppresses the ignition of the battery pack primarily by performing extinguishing cooling with an extinguishing agent and then, secondarily, cooling with external extinguishing water.

A battery pack fire extinguisher for an electric vehicle, according to an embodiment of the present disclosure, includes: a pack case in an electric vehicle and accommodating a plurality of battery modules; an extinguishing tube between adjacent ones of the battery modules in the pack case; an extinguishing agent cylinder selectively connected to the extinguishing tube and mounted in (e.g. configured to be mountable in) an electric vehicle and configured to supply an extinguishing agent; an extinguishing water connector selectively connected to the extinguishing tube and configured to supply external extinguishing water; and a one-way flow valve to prevent backflow of the extinguishing agent or extinguishing water when selectively connecting the extinguishing agent cylinder or the extinguishing water connector to the extinguishing tube, respectively.

The pack case may include a rupture disk configured to open when an internal pressure in the pack case increases.

The pack case may include a temperature sensor configured to detect a temperature rise in the pack case and to send a corresponding detection signal to a controller.

The pack case may include a relief valve configured to open when an internal pressure in the pack case rises.

The extinguishing agent cylinder may further include a solenoid valve controlled by the controller to supply and block the extinguishing agent to the outlet connected to the extinguishing tube.

The extinguishing agent cylinder may have an orifice at an outlet of the solenoid valve that is configured to control a spray pressure of the extinguishing agent into the extinguishing tube.

The extinguishing water connector may be a one-touch coupling.

An install position of the extinguishing tube may be higher than 1/3 of the height of the pack case.

The extinguishing tube may have openings corresponding to each of the battery modules and an opening member configured to open the opening (e.g. one or more of the openings) in response to a rise in temperature of the corresponding battery module (e.g of the corresponding one or more of the battery modules).

A battery pack fire extinguishing method for an electric vehicle, according to an embodiment, includes: opening an opening in an extinguishing tube when a temperature rises in a pack case accommodating battery modules due to thermal distortion and ignition of an extinguishing tube, comparing a temperature rise value according to an input signal of a temperature sensor in the pack case with a reference value stored in a controller to determine whether or not the temperature rise value is higher than the reference value; supplying an extinguishing agent to the extinguishing tube to be sprayed on the battery module to perform primary cooling and extinguishing of the battery module with the extinguishing agent if the temperature rise value is higher than the reference value; and supplying external extinguishing water to the extinguishing tube to perform secondary cooling and extinguishing of the battery module with extinguishing water after the extinguishing agent is exhausted.

The opening of the opening in the extinguishing tube may include opening a solenoid valve of an extinguishing agent cylinder by the controller, spraying the extinguishing agent stored in the extinguishing agent cylinder into the opening of the extinguishing tube, primary cooling and extinguishing the ignited battery module with the extinguishing agent, filling the inside of the pack case with the extinguishing agent, and continuously cooling the ignited battery module until the extinguishing agent is exhausted.

The supplying of the external extinguishing water may include connecting the extinguishing tube to an external extinguishing water pipe after the primary cooling, and extinguishing and continuous cooling of the ignited battery module by spraying the extinguishing water inside the pack case.

At least some of the above and other features of the invention are set out in the claims.

Because the battery pack fire extinguisher is equipped with the extinguishing agent cylinder including an extinguishing agent in the electric vehicle, when an event occurs, the extinguishing agent is sprayed directly and intensively on the ignited battery module to extinguish it, thereby suppressing ignition of the battery pack early.

According to embodiments, when an event occurs, the ignition of the battery pack is suppressed by spraying the extinguishing agent stored in the electric vehicle, and then, the external extinguishing water is connected through the extinguishing water connector to supply sufficient extinguishing water to the ignited battery module to be secondarily extinguished and cooled, thereby further suppressing ignition of the battery pack.

### BRIEF DESCRIPTION OF THE DRAWINGS

FIG. 1 is a schematic diagram of a battery pack fire extinguisher for an electric vehicle according to an embodiment.
FIG. 2 is a perspective view of the battery pack fire extinguisher shown in FIG. 1.
FIG. 3 is a cross-sectional view taken along the line III-III in FIG. 2.
FIG. 4 is a flowchart describing a battery pack fire extinguishing method for an electric vehicle according to an embodiment.
FIG. 5 is a flowchart describing a third step of the method described in FIG. 4.
FIG. 6 is a flowchart describing a fourth step of the method described in FIG. 4.

### DETAILED DESCRIPTION

Hereinafter, the present disclosure will be described more fully with reference to the accompanying drawings, in which embodiments of the present disclosure are shown. As those skilled in the art would realize, the described embodiments may be modified in various different ways, all without departing from the scope of the present disclosure. The drawings and description are to be regarded as illustrative in nature and not restrictive.

It will be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. For example, the expression "at least one of a, b, or c" indicates only a, only b, only c, both a and b, both a and c, both b and c, all of a, b, and c, or variations thereof. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

A person of ordinary skill in the art would appreciate, in view of the present disclosure in its entirety, that each suitable feature of the various embodiments of the present disclosure may be combined or combined with each other, partially or entirely, and may be technically interlocked and operated in various suitable ways, and each embodiment may be implemented independently of each other or in conjunction with each other in any suitable manner unless otherwise stated or implied.

The controller and/or any other relevant devices or components according to embodiments of the present disclosure described herein may be implemented utilizing any suitable hardware, firmware (e.g., an application-specific integrated circuit), software, and/or a suitable combination of software, firmware, and hardware. For example, the various components of the controller may be formed on one integrated circuit (IC) chip or on separate IC chips. Further, the various components of the controller may be implemented on a flexible printed circuit film, a tape carrier package (TCP), a printed circuit board (PCB), or formed on a same substrate as the controller. Further, the various components of the controller may be a process or thread, running on one or more processors, in one or more computing devices, executing computer program instructions and interacting with other system components for performing the various functionalities described herein. The computer program instructions are stored in a memory which may be implemented in a computing device using a standard memory device, such as, for example, a random access memory (RAM). The computer program instructions may also be stored in other non-transitory computer readable media such as, for example, a CD-ROM, flash drive, or the like. Also, a person of skill in the art should recognize that the functionality of various computing devices may be combined or integrated into a single computing device or the functionality of a particular computing device may be distributed across one or more other computing devices without departing from the scope of the embodiments of the present disclosure.

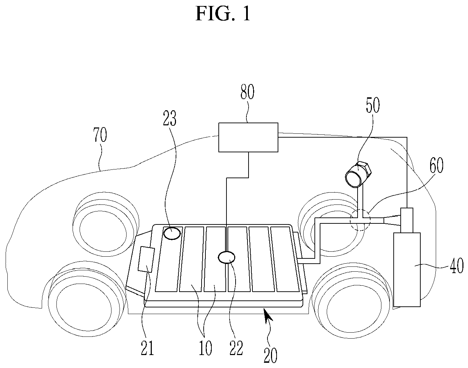

FIG. 1 is a schematic diagram of a battery pack fire extinguisher for an electric vehicle according to an embodiment. Referring to FIG. 1, a battery pack fire extinguisher (also referred to as a "battery pack extinguisher") for an electric vehicle includes a battery module 10 including a plurality of built-in battery cells, a pack case 20, an extinguishing tube 30, an extinguishing agent cylinder 40, an extinguishing water connector 50, and a one-direction flow valve (e.g., a one-way flow valve) 60. The battery pack extinguisher can be installed in an electric vehicle 70.

A plurality of battery modules 10 are provided to enable the electric vehicle 70 to produce sufficient output (e.g., to sufficiently power the electric vehicle 70), each of which include rechargeable batteries connected together in series and in parallel. The pack case 20 may be formed from a vehicle body of the electric vehicle 70 or may be manufactured separately from the vehicle body and assembled into the vehicle body.

The pack case 20 may be equipped with (e.g., may include) a rupture disk 21 on one side. In the event of battery ignition within the battery module 10, an internal pressure of the pack case 20 may increase. In response to the increased internal pressure, the rupture disk 21 opens (e.g., bursts) and discharges the internal pressure of the pack case 20, thereby preventing explosion of the battery cell or the battery module 10.

The pack case 20 may be equipped with (e.g., may include) a temperature sensor 22 on one side. The temperature sensor 22 detects a temperature increase due to battery ignition within the battery module 10 and sends the detection signal to a controller 80.

The pack case 20 may be equipped with (e.g., may include) a relief valve 23 on one side. The relief valve 23 opens (e.g., bursts) when the internal pressure of the pack case 20 increases to prevent explosion of the battery cell or the battery module 10.

The relief valve 23 opens in response to an internal pressure that is lower than the opening pressure of the rupture disk 21. By opening the relief valve 23, the internal pressure of the pack case 20 may reach an appropriate level. However, if the pressure continues to rise even after the relief valve 23 opens and reaches the opening pressure of the rupture disk 21, the rupture disk 21 opens as well.

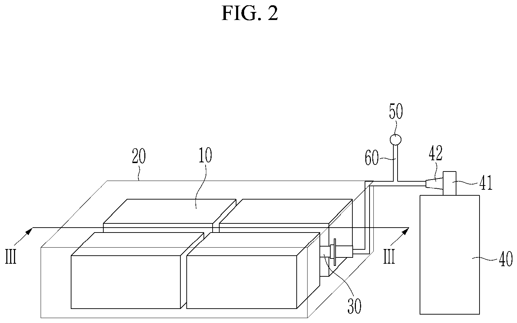

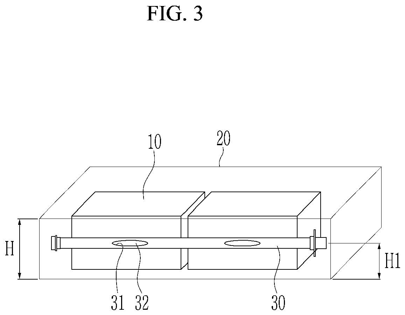

FIG. 2 is a perspective view of the battery pack extinguisher shown in FIG. 1. FIG. 3 is a cross-sectional view taken along the line III-III in FIG. 2. Referring to FIG. 2 and FIG. 3, the extinguishing tube 30 is installed between the battery modules 10 within the pack case 20. The extinguishing tube 30 is configured to supply an extinguishing agent or extinguishing water to the ignited battery module 10.

A single extinguishing tube 30 is illustrated in the present embodiment, but when the number of the battery modules 10 increases, an extinguishing tube may be placed between each of the battery modules 10 (e.g., between each of two adjacent battery modules 10) to supply the extinguishing agent and the extinguishing water between each of the battery modules 10.

The extinguishing agent cylinder 40 and the extinguishing water connector 50 are selectively connected to the extinguishing tube 30 through the one-direction flow valve 60 so that the extinguishing agent cylinder 40 may supply (e.g., may selectively supply) the extinguishing agent and the extinguishing water connector 50 may supply the external extinguishing water.

The extinguishing agent cylinder 40 is mounted on (or in) the electric vehicle 70 and is connected to the extinguishing tube 30 by the one-direction flow valve 60. The extinguishing water connector 50 is mounted on (or in) the electric vehicle 70 and is connected to the extinguishing tube 30 by the one-direction flow valve 60.

The one-direction flow valve 60 selectively connects the extinguishing tube 30 to the extinguishing agent cylinder 40 or the extinguishing water connector 50. When supplying the extinguishing agent or the extinguishing water to the extinguishing tube 30, the one-direction flow valve 60 prevents the extinguishing agent from flowing back to the extinguishing water connector 50 and prevents the extinguishing water from flowing back to the extinguishing agent cylinder 40, respectively.

The extinguishing agent cylinder 40 may be equipped with (e.g., includes) a solenoid valve 41 at an outlet connected to the extinguishing tube 30. The solenoid valve 41 is controlled by the controller 80 to control the supply and blocking of the extinguishing agent from the extinguishing agent cylinder 40 to the extinguishing tube 30 through the one-direction flow valve 60.

The extinguishing agent cylinder 40 may have an orifice 42 at the outlet of the solenoid valve 41. The orifice 42 controls the spraying (or outlet) pressure of the extinguishing agent supplied from the solenoid valve 41 to the extinguishing tube 30 through the one-direction flow valve 60.

As an example, the extinguishing water connector 50 may be a one touch coupling or a quick connector. The extinguishing water connector 50 is configured to quickly supply the extinguishing water due to the ignition of the battery module 10.

To this end, the extinguishing water connector 50 may be provided around a charge port of an electric vehicle 70, and in a hybrid vehicle, it may be provided around the fuel inlet.

The installation position H1 of the extinguishing tube 30 may be a position higher than 1/3 of the height H of the pack case 20 (H1≥H/3). Upon ignition of the battery module 10, that is, the initial occurrence of fire, the extinguishing tube 30 opens, the extinguishing agent is sprayed, and the extinguishing agent fills inside the pack case 20. The install position H1 of the extinguishing tube 30 may be set in consideration of the capacity of the extinguishing agent cylinder 40.

As an example, when the install position H1 of the extinguishing tube 30 is higher than 1/3 of the height of the battery cell, the extinguishing agent may be filled up to more than 1/3 of the height of the battery cell. Therefore, the primary cooling and extinguishing of the ignited battery cell may be more effective. For convenience, the height of the battery cell may be referred to as the height of the battery module 10, which is lower than the height H of the pack case 20.

In some embodiments, the extinguishing tube 30 is positioned at a height of about 50 mm or more from the bottom of the pack case 20 in consideration of the diameter thereof. The solenoid valve 41 and the orifice 42 may fill with speed in consideration of the capacity of the extinguishing agent cylinder 40, the capacity of the pack case 20, and the primary cooling extinguishing of the ignited battery module 10 or the battery cell. As an example, the solenoid valve 41 and the orifice 42 may fill with the speed of about 1 LPM (liter per minute) or higher.

The extinguishing tube 30 has openings 31 corresponding to each of the battery modules 10, and an opening member 32 configured to open the corresponding opening 31 in response to the increased temperature of the ignited battery module 10 from among the openings 31.

For example, the opening member 32 opens the nearest opening 31 to the fire based on the ignition temperature of the battery module 10, allowing the extinguishing agent supplied to the extinguishing tube 30 to be concentrated and supplied to the ignited battery module 10. The battery module 10 undergoes the primary cooling extinguishing by the supplied extinguishing agent.

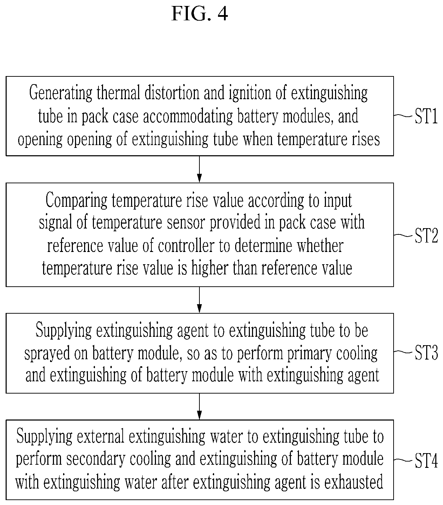

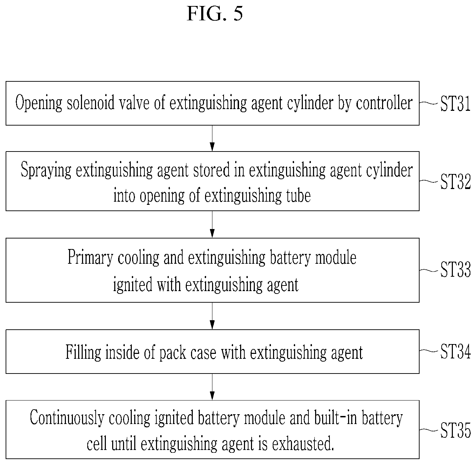

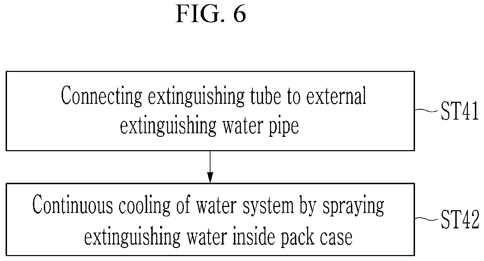

FIG. 4 is a flowchart describing a battery pack fire extinguishing method for an electric vehicle according to an embodiment. FIG. 5 is a flowchart describing a third step of the method described in FIG. 4. FIG. 6 is a flowchart describing a fourth step of the method described in FIG. 4.

Referring to FIG. 4 to FIG. 6, a battery pack fire extinguishing method (also referred to as a "battery pack extinguishing method") for an electric vehicle includes a first step ST1, a second step ST2, a third step ST3, and a fourth step ST4. In the first step ST1, thermal distortion and ignition of the extinguishing tube 30 in the pack case 20 including the battery modules 10 occurs when a temperature rises, and the opening 31 in the extinguishing tube 30 is opened.

When the temperature inside the pack case 20 rises due to ignition of the battery module 10 in the first step ST1, the opening member 32 that blocks the opening 31 of the extinguishing tube 30 is thermally deformed (e.g., melts) and opens the opening 31. The opening member 32 may be formed of a resin material that can open the opening 31 by thermal deformation.

In the second step ST2, the temperature sensor 22 provided in the pack case 20 detects the increased temperature due to the ignition of the battery module 10 and inputs the detection signal to the controller 80. The controller 80 compares the temperature rise value according to the input signal with a reference value (e.g., a predetermined value) of the controller 80 and determines whether or not the temperature rise value is higher than the reference value.

In the third step ST3, the extinguishing agent is supplied to the extinguishing tube 30 to be sprayed on the battery module 10 when the temperature rise value detected by the temperature sensor 22 is greater than the reference value. Therefore, the third step ST3 performs the primary cooling extinguishing of the battery module 10 with the extinguishing agent.

Referring to FIG. 5, the third step ST3 may include a third/first step ST31, a third/second step ST32, a third/third step ST33, a third/fourth step ST34, and a third/fifth step ST35. In the third/first step ST31, the solenoid valve 41 of the extinguishing agent cylinder 40 is opened by the controller 80.

The controller 80 compares the temperature rise value according to the input signal of the temperature sensor 22 with the reference value of the controller 80, and if it determines that the temperature rise value is higher than the reference value, opens the solenoid valve 41.

In the third/second step ST32, due to the opening of the solenoid valve 41, the extinguishing agent stored in the extinguishing agent cylinder 40 is supplied to the extinguishing tube 30 through the solenoid valve 41 and the one-direction flow valve 60 and is sprayed through the opening 31 of the extinguishing tube 30. Because the opening 31 is opened, the extinguishing agent is sprayed intensively through the opening 31 onto the ignited battery module 10 adjacent to the opening 31.

In the third/third step ST33, the extinguishing agent is intensively sprayed on the ignited battery module 10, thereby performing the primary cooling and extinguishing to this battery module 10. The ignition and flame of the battery module 10 may be completely extinguished by the extinguishing agent in the early stage of the ignition.

In the third/fourth step ST34, the inside of the pack case 20 is filled with the extinguishing agent. The extinguishing agent cylinder 40 sprays the extinguishing agent into the inside of the pack case 20 until the stored extinguishing agent is exhausted. In the third/fifth step ST35, the ignited battery module 10 and the built-in battery cell are continuously cooled until the extinguishing agent is exhausted.

As an example, the extinguishing agent may be dodecafluoro-2-methylpentan-3-one, sold by the 3M Corporation as Novac 1230. The extinguishing agent remaining in the pack case 20 cools the inside of pack case 20 by being continuously gasified (e.g., by undergoing a phase transition) after the extinguishing agent spraying is completed.

As such, in this embodiment, the extinguishing agent cylinder 40 with the built-in extinguishing agent is mounted on the electric vehicle 70 so when an event occurs, the extinguishing agent may be sprayed intensively on the ignition battery module 10 for the primary cooling extinguishing, thereby suppressing the ignition of the battery pack early.

In the fourth step ST4, after the extinguishing agent is exhausted, the external extinguishing water is supplied to the extinguishing tube 30 through the extinguishing water connector 50 and one-direction flow valve 60 to perform the secondary cooling and extinguishing of the ignited battery module 10 with the extinguishing water. For example, the ignited battery module 10 is extinguished by the primary cooling with the extinguishing agent and is then extinguished by the secondary cooling by the extinguishing water.

Referring to FIG. 6, the fourth step ST4 may include the fourth/first step ST41, at when the extinguishing tube 30 is connected to an external extinguishing water pipe after the primary cooling extinguishing, and a fourth/second step ST42, at when the extinguishing water is sprayed inside the pack case 20 to continuously cool the ignited battery module 10.

As described above, when an event (e.g., a thermal event) occurs, an extinguishing agent provided in (or stored in) the electric vehicle is sprayed to suppress ignition of the battery pack early and then external extinguishing water is connected and supplied through an extinguishing water connector to secondarily extinguish and cool the battery pack, thereby further suppressing ignition (or reignition) of the battery pack.

While the present disclosure has been described in connection with what is presently considered to be practical embodiments, it is to be understood that the present disclosure is not limited to the disclosed embodiments but, on the contrary, is intended to cover various modifications and equivalent arrangements included within the scope of the appended claims and their equivalents.

Embodiments are set out in the following clauses:
Clause 1. A battery pack extinguisher for an electric vehicle comprising:
   a pack case provided in an electric vehicle and accommodating a plurality of battery modules;
   an extinguishing tube installed between the battery modules within the pack case;
   an extinguishing agent cylinder that is selectively connected to the extinguishing tube and mounted on an electric vehicle to supply an extinguishing agent;
   an extinguishing water connector that is selectively connected to the extinguishing tube and supplies external extinguishing water; and
   a one-way flow valve to prevent backflow of the extinguishing agent or extinguishing water when selectively connecting the extinguishing agent cylinder or the extinguishing water connector to the extinguishing tube.
Clause 2. The battery pack extinguisher for the electric vehicle of clause 1, wherein
   the pack case includes a rupture disk that opens when the internal pressure increases due to battery ignition within the battery module and prevents an explosion.
Clause 3. The battery pack extinguisher for the electric vehicle of clause 1 or clause 2, wherein
   the pack case includes a temperature sensor that detects a temperature rise due to the battery ignition within the battery module and sends the detection signal to the controller.
Clause 4. The battery pack extinguisher for the electric vehicle of any one of clauses 1 to 3, wherein
   the pack case includes a relief valve that opens when the internal pressure rises and prevents an explosion due to an increase in internal pressure.
Clause 5. The battery pack extinguisher for the electric vehicle of clause 3 or clause 4, wherein
   the extinguishing agent cylinder further includes a solenoid valve controlled by the controller to supply and block the extinguishing agent to the outlet connected to the extinguishing tube.
Clause 6. The battery pack extinguisher for the electric vehicle of clause 5, wherein
   the extinguishing agent cylinder further includes an orifice that is provided at the outlet of the solenoid valve and controls the spray pressure of the extinguishing agent into the extinguishing tube.
Clause 7. The battery pack extinguisher for the electric vehicle of any one of clauses 1 to 6, wherein
   the extinguishing water connector is formed by one touch coupling.
Clause 8. The battery pack extinguisher for the electric vehicle of any one of clauses 1 to 7, wherein
   the install position H1 of the extinguishing tube is higher than 1/3 of the height H of the pack case (H1≥H/3).
Clause 9. The battery pack extinguisher for the electric vehicle of any one of clauses 1 to 8, wherein
   the extinguishing tube includes openings provided corresponding to each of the battery modules, and an opening member that opens the opening in response to the temperature of the battery module that ignites among the openings.
Clause 10. A battery pack extinguishing method for an electric vehicle, comprising:
   generating a thermal distortion and ignition of an extinguishing tube in a pack case accommodating battery modules, and opening an opening of the extinguishing tube when a temperature rises;
   comparing a temperature rise value according to an input signal of a temperature sensor provided in the pack case with a predetermined value of a controller to determine whether the temperature rise value is higher than the predetermined value;
   supplying an extinguishing agent to the extinguishing tube to be sprayed on the battery module, so as to perform primary cooling and extinguishing of the battery module with the extinguishing agent if the temperature rise value is higher than the predetermined value; and
   supplying external extinguishing water to the extinguishing tube to perform secondary cooling and extinguishing of the battery module with extinguishing water after the extinguishing agent is exhausted.
Clause 11. The battery pack extinguishing method for the electric vehicle of clause 10, wherein
   the primary cooling and extinguishing includes:
   opening the solenoid valve of the extinguishing agent cylinder by the controller;
   spraying the extinguishing agent stored in the extinguishing agent cylinder into the opening of the extinguishing tube;
   primary cooling and extinguishing the battery module ignited with the extinguishing agent;
   filling the inside of the pack case with an extinguishing agent; and
   continuously cooling the ignited battery module and the built-in battery cell until the extinguishing agent is exhausted.
Clause 12. The battery pack extinguishing method for the electric vehicle of clause 10 or clause 11, wherein
   the secondary cooling and extinguishing includes
   connecting the extinguishing tube to an external extinguishing water pipe after the primary cooling extinguishing, and
   continuous cooling of a water system by spraying the extinguishing water inside the pack case.

**Description of Some Reference Symbols**

| | | | |
|---|---|---|---|
| 10: | battery module | 20: | pack case |
| 21: | rupture disk | 22: | temperature sensor |
| 23: | relief valve | 30: | extinguishing tube |
| 31: | opening | 32: | opening member |
| 40: | extinguishing agent cylinder | 41: | solenoid valve |
| 42: | orifice | 50: | extinguishing water connector |
| 60: | one direction flow valve | 70: | electric vehicle |
| 80: | controller | | |

## Claims

1. A battery pack fire extinguisher for an electric vehicle, the battery pack fire extinguisher comprising:
a pack case for an electric vehicle and accommodating a plurality of battery modules;
an extinguishing tube between adjacent ones of the battery modules in the pack case;
an extinguishing agent cylinder selectively connected to the extinguishing tube and configured to be mountable in the electric vehicle and configured to supply an extinguishing agent;
an extinguishing water connector selectively connected to the extinguishing tube and configured to supply external extinguishing water; and
a one-way flow valve to prevent backflow of the extinguishing agent or extinguishing water when selectively connecting the extinguishing agent cylinder or the extinguishing water connector to the extinguishing tube, respectively.

2. The battery pack fire extinguisher as claimed in claim 1, wherein the pack case comprises a rupture disk configured to open when an internal pressure inside the pack case increases.

3. The battery pack fire extinguisher as claimed in claim 1 or claim 2,
wherein the pack case comprises a relief valve configured to open when an internal pressure inside the pack case rises.

4. The battery pack fire extinguisher as claimed in any one of claims 1 to 3, wherein the pack case comprises a temperature sensor configured to detect a temperature rise within the battery module and to send a corresponding detection signal to a controller.

5. The battery pack fire extinguisher as claimed in claim 4, wherein the extinguishing agent cylinder further comprises a solenoid valve controlled by the controller and configured to supply and block the extinguishing agent to an outlet connected to the extinguishing tube.

6. The battery pack fire extinguisher as claimed in claim 5, wherein the extinguishing agent cylinder has an orifice at the outlet of the solenoid valve that is configured to control a spray pressure of the extinguishing agent into the extinguishing tube.

7. The battery pack fire extinguisher as claimed in any one of claims 1 to 6, wherein the extinguishing water connector is a one touch coupling.

8. The battery pack fire extinguisher as claimed in any one of claims 1 to 7, wherein an install position of the extinguishing tube is higher than 1/3 of a height of the pack case.

9. The battery pack fire extinguisher as claimed in any one of claims 1 to 8, wherein the extinguishing tube has openings corresponding to each of the battery modules and an opening member configured to open one or more of the openings in response to an increased temperature of the corresponding one or more of the battery modules.

10. A battery pack fire extinguishing method for an electric vehicle, the method comprising:
opening an opening of an extinguishing tube by thermal distortion of an extinguishing tube in a pack case accommodating battery modules in response to a temperature rise;
comparing a temperature rise value according to an input signal of a temperature sensor in the pack case with a reference value stored in a controller to determine whether or not the temperature rise value is higher than the reference value;
supplying an extinguishing agent to the extinguishing tube to be sprayed onto the battery module to perform primary cooling and extinguishing of the battery module with the extinguishing agent when the temperature rise value is higher than the reference value; and
supplying external extinguishing water to the extinguishing tube to perform secondary cooling and extinguishing of the battery module with extinguishing water after the extinguishing agent is exhausted.

11. The battery pack fire extinguishing method as claimed in claim 10,
wherein the supplying the extinguishing agent to the extinguishing tube comprises:
opening a solenoid valve of an extinguishing agent cylinder by the controller;
spraying the extinguishing agent stored in the extinguishing agent cylinder into the opening of the extinguishing tube;
primary cooling and extinguishing of the ignited battery module with the extinguishing agent;
filling an inside of the pack case with the extinguishing agent; and
continuously cooling the ignited battery module until the extinguishing agent is exhausted.

12. The battery pack fire extinguishing method as claimed in claim 10 or claim 11, wherein the supplying external extinguishing water to the extinguishing tube comprises:
connecting the extinguishing tube to an external extinguishing water pipe after the primary cooling and extinguishing; and
continuous cooling of the ignited battery module by spraying the extinguishing water inside the pack case.
